# EUROPEAN PATENT APPLICATION

(11) **EP 2 312 537 A1**
(43) Date of publication of application: **20.04.2011**
(21) Application number: 09290789.8
(22) Date of filing: 15.10.2009
(51) Int. Cl.: G07B 15/02, G08G 1/14

(54) **Device and method for remotely initiated parking service**

(71) Applicant: Alcatel Lucent, 75008 Paris (FR)
(72) Inventor: Moons, Jan, 2220 Heist-op-den-Berg (BE); Lou, Zhe, 2000 Anwerpen (BE)
(74) Representative: Moens, Marnix Karel Christiane

(57) **Abstract**

The present invention is related to a device (1) for use in a remotely initiated parking service. The device is arranged for receiving a request for parking a vehicle (4) from a device (3) for initiating a parking session and arranged for triggering a means (2) for determining the location of said device for initiating said parking session. The device comprises a decision module arranged for receiving information indicative of the identity of the vehicle (4) and arranged for receiving location information from a means (2) for determining the location of the device (3) for initiating the parking session, said decision module further arranged for deciding from communication with the device for initiating the parking session or with the means for determining the location whether the device for initiating the parking session is wirelessly coupled with a transceiver contained in the vehicle and for determining, if it is decided there is a wireless coupling, from the received location information whether the device for initiating the parking session is moving.

## Description

### Field of the Invention

The present invention generally relates to the field of systems and methods for parking services based on wireless technology and more in particular to a device and method for operating a parking service initiated by a remote device, e.g. a cellular telephone device.

### Background of the Invention

Nowadays it is possible to use a cellular phone to pay for a parking ticket. The user has to send a specific short message service (SMS) text message to the provider of the parking service to start the process of parking. When the user leaves the parking place he explicitly has to send a "quit" message to the parking service provider, so the service provider can settle the payment.

However, when an absent-minded user forgets to send this "quit" message when leaving the parking spot be has to pay the maximum amount nf money he can pay with the service, even though he/she has left earlier. In other words, when the user wants to quit parking, current implementations of paying a parking ticket explicitly require that he send by SMS a "quit" message to the service provider.

In the prior art systems are known wherein this problem is solved, whereby only one SMS text message must be sent. For example, the web site www.smsparking.rs describes a solution wherein just one SMS message is needed for an entire parking action. However, the disclosed system is limited in that with the one SMS message a fixed amount of parking time is purchased, e.g. one hour of parking time or more parking hours, or even a one day parking ticket.

Also in patent application WO2005/05057 a system for paying parking fees is disclosed wherein a cellular telephone can be used to send a short message (SMS) to a dedicated telephone number in order to pay the parking fees for a predetermined period of time.

However, there is a need for a solution based on a single short message wherein users have to pay for the actual period of time they have their vehicle parked.

### Aims of the invention

The present invention aims to provide a method and device for a message based parking service wherein only for initiating the service a message needs to be sent and wherein only the actual parking time used is charged.

### Summary

The present invention relates to a device for use in a remotely initiated parking service. The device is arranged for receiving a request for parking a vehicle from a device suitable for initiating a parking session. The device is also arranged for triggering a means for determining the location of the device for initiating the parking session, when the request for parking the vehicle is received. The device according to the invention comprises a decision module arranged for receiving information indicative of the identity of the vehicle. It is also arranged for receiving location information from a means for determining the location of the device for initiating the parking session. The decision module is capable of deciding from communication with the device for initiating the parking session or with the means for determining the location whether the device for initiating the parking session is wirelessly coupled with a transceiver contained in the vehicle and for determining, if it is decided there is a wireless coupling, from the received location information whether the device for initiating the parking session is moving. For reaching the decision that the parking session has finished it is needed that the transceiver in the vehicle and the device for initiating the parking session are coupled again and it must be established the said device for initiating the parking session is moving again.

The above solution indeed achieves the aim of the invention. The device only receives a request from the user who wishes to initiate a parking session for his/her vehicle. In order to send the request the user employs a device suitable for initiating a parking session. On reception of the request the device immediately triggers a means for determining the position of the device used for initiating the parking session. In an advantageous embodiment this device is a cellular phone. The request can then be transmitted by short message service and the short message can contain the information indicative of the vehicle identity. Alternative embodiments can however be envisaged. The parking service is then initiated, for example, by a remote procedure call or by a web service. The device for initiating the parking session can then be a personal digital assistant (PDA), a smart phone, a laptop or a handheld game consoles such as Sony's PSP or Nintendo's DS.

While the vehicle is parked, the decision module keeps receiving information on the location of the device used for initiating the parking service. As long as the decision module notes from the received information that there is no coupling between the device for initiating the parking session and the transceiver in the vehicle, it is assumed the vehicle is still parked. When it is noted that the device for initiating is again coupled with the transceiver in the vehicle and when it is derived from the location information that the vehicle is moving, the decision module concludes that the parking session has finished. The time elapsed between sending the request and establishing that there is a wireless coupling between the vehicle and the device for initiating and that the vehicle is moving again, then corresponds to the actual duration of the parking session.

In an embodiment the information concerning the identity of the vehicle is transmitted in the request itself. This is preferably the case when a cellular phone is used for sending the request. The cellular phone obtains the information on the vehicle identity through the coupling with the transceiver in the vehicle via short range wireless communication (e.g. Bluetooth).

In another preferred embodiment the identity of the vehicle (e.g. its license number) can be communicated to the device via the means for determining the location. In that case said means for determining tracks the device used for initiating the parking session immediately after it has been triggered by the device of the invention and, once it is located, immediately obtains the necessary information regarding the vehicle identity.

In another embodiment the device advantageously comprises storage means for storing the information indicative of the identity of the vehicle along with information indicative of the device for initiating said parking session. In this way the link between the identification of the device initiating the parking session and the vehicle in question is stored.

In an embodiment wherein the device for initiating the parking session is a cellular phone, it is advantageous to use the control channel to exchange information between the cellular phone and the device of the invention. The control channel is actually a special frequency that the cell phone and base station use to talk about one another about things like call-setup, channel changing, changing base station etc. A Mobile Telephone Switching Office stores the user's cell phone IDs in a database so that it knows which cell the user is in when it wants to ring the cell phone. This way the control channel is used to keep track of the location and the cell one is in.

In another aspect the invention relates to a system for providing a remotely initiated parking service comprising a device as previously described and means for determining the location of a device used for initiating the parking session.

In another aspect the invention relates to a module for use in a device for initiating a parking session. The module is arranged for transmitting a message comprising a request for a parking session. The module is characterised in that said message further comprises information indicative of the identity of a vehicle containing a transceiver to which said device for initiating a parking session is wirelessly coupled and information indicative of the identity of said device for initiating a parking session.

The invention also relates to a cellular telephone device comprising a module as previously described.

In yet another aspect the invention relates to a method for operating a remotely initiated parking service, the method comprising the steps of :
- receiving a request for parking a vehicle from a device for initiating a parking session, while said device is wirelessly coupled with a transceiver in said vehicle,
- triggering, on receiving said request, a means for determining the location of said device for initiating a parking session,
- receiving information indicative of the identity of said vehicle,
- receiving location information for said device for initiating said parking session,
- checking whether said device initiating said parking session is wirelessly coupled with said transceiver in said vehicle and determining, if it is decided there is a wireless coupling, from said received location information whether said device for initiating said parking session is moving.
When the vehicle transceiver and the device for initiating a parking session are found to be coupled again and when from the location information received it is noted that said device is moving again, it is concluded that the parking session has finished.

### Brief Description of the Drawings

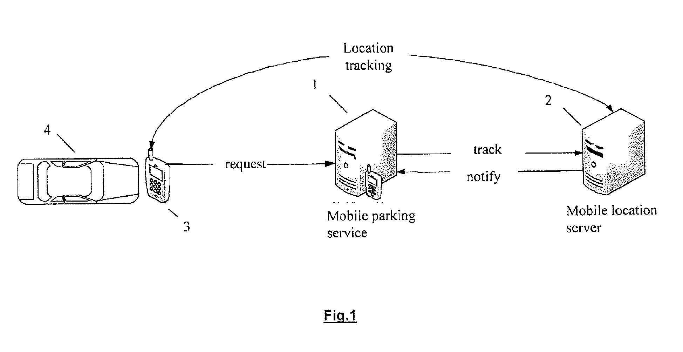

Fig. 1 illustrates an embodiment of the solution according to the present invention.

### Detailed Description of the Invention

The drawbacks of the prior art solutions are overcome by the device for use in a remotely initiated parking service according to the present invention. The invention proposes a device that can be triggered with a single request and that allows determining the effective parking time.

Fig.1 illustrates an embodiment of the invention wherein a cellular phone is used for initiating the parking session and wherein the request for a parking session is transmitted via a short message service (SMS). When a person parks his car, he sends a "start parking" SMS to the number of the operator of the parking system. The car and the mobile are coupled to each other through wireless technology (e.g. Bluetooth, etc...). They need to be paired together to be able to start and stop the parking session. When the parking system receives the request, it starts the parking session and triggers a mobile location based server (like the Alcatel-Lucent 8606 EAGS product) to track the mobile phone. Now the mobile phone and its corresponding phone tower start communicating with each other over the control channel, but the packets that they exchange now are changed and not only identify the mobile phone but also the car identification it is paired with. The mobile location server knows the location of the mobile and whether or not it is still paired with the car. As long as the mobile is not paired with the car it means that the car is still in the parking lot. The system gets real-time updates from the mobile location server about the whereabouts of the mobile. Based on this data the SMS-based parking system checks if whether or not the mobile is paired with the car and moving, when this is the case it can stop the parking session and settle the payment.

The device for initiating the parking session can be a mobile phone as in the example of Fig.1, but may also be a PDA device or a smart phone, laptop or handheld game console such as Sony's PSP or Nintendo's DS..

The device for initiating can send the information indicating which is the vehicle concerned in the parking session, along with the request. The device obtains the information from a transceiver in the vehicle with which it can communicate via a short range communication like e.g. Bluetooth.

In an alternative approach only the request is sent to the device (3). The information on the vehicle identity is then obtained via the location server (2); which is triggered immediately after reception of the request in device (3) for use in the parking service. In this case the vehicle identity information can be transmitted together with information on the location of the device that has initiated the parking session (i.e. the device that has sent the request).

In one embodiment the device for use in a parking service according to the present invention forms together with the location server a system suitable for setting up a parking service, wherein a parking session can be remotely initiated.

In one aspect the invention also relates to a module for use in a device to initiate a parking session (like a cellular phone, a PDA etc...). The module is capable of transmitting a message containing the request as well as the information that identifies the vehicle that is parked and information that identifies the device used to send the request. The module is arranged for communicating with telecommunication equipment like phone towers, antennas, ...

The module as above described can be used in the embodiment wherein the device that initiates the parking session also provides the vehicle identity information. This information is provided to the module by the transceiver in the vehicle via short range communication.

A key component of the device for mobile parking is the decision module. This module can communicate with the mobile location server, for example the Alcatel-Lucent 8606 EAGS; to keep track of the whereabouts of the device used to initiate the parking session. The decision module is capable of checking whether or not the mobile is paired with the corresponding car/vehicle. When car and mobile are paired it calculates whether or not they are moving. If so, it is decided the parking session is stopped.

The proposed invention allows a service whereby people only pay for the time their car is really parked. They don't pay the maximum amount of money anymore because they forget to send a "quit" message to the parking system.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Device (1) for use in a remotely initiated parking service, said device
- being arranged for receiving a request for parking a vehicle (4) from a device (3) for initiating a parking session, while said device is wirelessly coupled with a transceiver in said vehicle (4),
- being arranged for triggering a means (2) for determining the location of said device (3) for initiating said parking session and
- comprising a decision module arranged for receiving location information from said means (2) for determining the location of said device (3) for initiating said parking session and arranged for receiving information indicative of the identity of said vehicle, said decision module further arranged for deciding from communication with said device (3) for initiating said parking session or with said means for determining the location whether said device for initiating said parking session is wirelessly coupled with a transceiver contained in said vehicle and for determining, if it is decided there is a wireless coupling, from said received location information whether said device (3) for initiating said parking session is moving.

2. Device as in claim 1, wherein said information indicative of the identity of said vehicle is comprised in said request.

3. Device as in claim 1, wherein said information indicative of the identity is received along with said location information from said means for determining the location.

4. Device as in any of claims 1 to 3, further comprising storage means for storing said information indicative of the identity of said vehicle along with information indicative of said device for initiating said parking session.

5. Device as in any of the previous claims, wherein said device (3) for initiating said parking session is a cellular phone.

6. Device as in claim 5, arranged for communicating with said device (3) via a control channel.

7. System for providing a remotely initiated parking service comprising a device as in any of claims 1 to 6 and means for determining the location of a device for initiating a parking session by sending a request for parking a vehicle.

8. Module for use in a device (3) for initiating a parking session, said module being arranged for transmitting a message comprising a request for a parking session, **characterised in that** said message further comprises information indicative of the identity of a vehicle (4) containing a transceiver to which said device for initiating a parking session is wirelessly coupled and information indicative of the identity of said device for initiating a parking session.

9. Cellular telephone device comprising a module as in claim 8.

10. Method for operating a remotely initiated parking service, comprising the steps of :
- receiving a request for parking a vehicle (4) from a device (3) for initiating a parking session, while said device (3) is wirelessly coupled with a transceiver in said vehicle (4),
- triggering, on receiving said request, a means (2) for determining the location of said device for initiating a parking session,
- receiving information indicative of the identity of said vehicle,
- receiving location information for said device for initiating said parking session,
- checking whether said device initiating said parking session is wirelessly coupled with said transceiver in said vehicle and determining, if it is decided there is a wireless coupling, from said received location information whether said device for initiating said parking session is moving.
